# EUROPEAN PATENT APPLICATION

(11) **EP 3 944 547 A1**
(43) Date of publication of application: **26.01.2022**
(21) Application number: 21177543.2
(22) Date of filing: 03.06.2021
(51) Int. Cl.: H04L 5/00, H04L 27/00, H04L 27/26, H04W 16/14, H04W 74/08

(54) **DETERMINING CYCLIC PREFIX (CP) EXTENSION AND LISTEN BEFORE TALK (LBT) TYPE FOR UPLINK TRANSMISSIONS**

(30) Priority: 24.07.2020 US 202063056409 P
(71) Applicant: Nokia Technologies Oy, 02610 Espoo (FI)
(72) Inventor: LUNTTILA, Timo, 02610 Espoo (FI); SCHOBER, Karol, 00440 Helsinki (FI); ROSA, Claudio, 8920 Randers NV (DK)
(74) Representative: Nokia EPO representatives

(57) **Abstract**

Systems, methods, apparatuses, and computer program products for cyclic prefix (CP) extension and listen before talk (LBT) type for uplink transmissions. Specifically, certain embodiments may provide for applying a CP and/or a LBT when DCI schedules two discontinuous uplink transmissions. For example, certain embodiments may provide for determining the LBT type and CP extension for jointly scheduled aperiodic sounding reference signal (A-SRS) and physical uplink shared channel (PUSCH)/physical uplink control channel (PUCCH) transmissions. When the two or more transmissions are non-consecutive, the first one of the transmissions may apply the CP extension and the LBT type indicated by the scheduling downlink control information (DCI). For the second transmission, the CP extension may depend on the CP extension indicated in the DCI.

## Description

### FIELD:

Some example embodiments may generally relate to mobile or wireless telecommunication systems, such as Long Term Evolution (LTE) or fifth generation (5G) radio access technology or new radio (NR) access technology, or other communications systems. For example, certain embodiments may relate to systems and/or methods for determining cyclic prefix (CP) extension and listen before talk (LBT) type for uplink transmissions.

### BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. 5G is mostly built on a new radio (NR), but a 5G network can also build on E-UTRA radio. It is estimated that NR may provide bitrates on the order of 10-20 Gbit/s or higher, and may support at least enhanced mobile broadband (eMBB) and ultra-reliable low-latency-communication (URLLC) as well as massive machine type communication (mMTC). NR is expected to deliver extreme broadband and ultra-robust, low latency connectivity and massive networking to support the Internet of Things (IoT). With IoT and machine-to-machine (M2M) communication becoming more widespread, there will be a growing need for networks that meet the needs of lower power, low data rate, and long battery life. It is noted that, in 5G, the nodes that can provide radio access functionality to a user equipment (i.e., similar to Node B in UTRAN or eNB in LTE) may be named gNB when built on NR radio and may be named NG-eNB when built on E-UTRA radio.

### SUMMARY:

According to some aspects, there is provided subject matter of the independent claims.

Some further aspects are defined in the dependent claims. Embodiments that do not fall under the scope of the claims are to be interpreted as examples useful for understanding the disclosure.

### BRIEF DESCRIPTION OF THE DRAWINGS:

For proper understanding of example embodiments, reference should be made to the accompanying drawings, wherein:
Fig. 1 illustrates an example method of CP extension and LBT type determination for uplink transmissions, according to some embodiments;
Fig. 2 illustrates an example flow diagram of a method, according to some embodiments;
Fig. 3 illustrates an example flow diagram of a method, according to some embodiments;
Fig. 4 illustrates another example of CP extension and LBT type for uplink transmissions, according to some embodiments;
Fig. 5a illustrates an example block diagram of an apparatus, according to an embodiment; and
Fig. 5b illustrates an example block diagram of an apparatus, according to another embodiment.

### DETAILED DESCRIPTION:

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for CP extension and LBT type for uplink transmissions, is not intended to limit the scope of certain embodiments but is representative of selected example embodiments.

The features, structures, or characteristics of example embodiments described throughout this specification may be combined in any suitable manner in one or more example embodiments. For example, the usage of the phrases "certain embodiments," "some embodiments," or other similar language, throughout this specification refers to the fact that a particular feature, structure, or characteristic described in connection with an embodiment may be included in at least one embodiment. Thus, appearances of the phrases "in certain embodiments," "in some embodiments," "in other embodiments," or other similar language, throughout this specification do not necessarily all refer to the same group of embodiments, and the described features, structures, or characteristics may be combined in any suitable manner in one or more example embodiments. In addition, the phrase "set of" refers to a set that includes one or more of the referenced set members. As such, the phrases "set of," "one or more of," and "at least one of," or equivalent phrases, may be used interchangeably. Further, "or" is intended to mean "and/or," unless explicitly stated otherwise.

Additionally, if desired, the different functions or operations discussed below may be performed in a different order and/or concurrently with each other. Furthermore, if desired, one or more of the described functions or operations may be optional or may be combined. As such, the following description should be considered as merely illustrative of the principles and teachings of certain example embodiments, and not in limitation thereof.

In NR, aperiodic sounding reference signal (A-SRS) transmission can be triggered by downlink control information (DCI) (e.g., DCI format 1_1/1_2, DCI format 0_1/0_2, and DCI format 2_3). For NR-unlicensed (NR-U), when a sounding reference signal (SRS) is triggered with a DCI format 0_1 or 1_1 that also includes an indication of CP extension, the indicated CP extension may apply to A-SRS as well. For NR-U, the SRS resource may start at an orthogonal frequency division multiplexing (OFDM) symbol (e.g., symbol #0 through #13) within a slot, where the starting symbol may be configured via radio resource control (RRC) signalling. Depending on the A-SRS starting symbol, and the symbols allocated for physical uplink shared channel (PUSCH) (e.g., with DCI 0_1) or physical uplink control channel (PUCCH) (e.g., with DCI 1_1), the SRS and the PUSCH/PUCCH may, or may not, be adjacent to each other, and the SRS may occur before or after the PUSCH/PUCCH.

The channel access type, the length of the CP extension preceding the uplink (UL) transmission, and the channel access priority class (CAPC) value (which may not be present in the DCI 1_1, but may be present in DCI 0_1) may be indicated to the UE. With respect to the indication to the UE, various combinations for uplink grant DCI 0_1 may be supported. The combinations may be for different entry indices, channel access types, CP extensions, and CAPC. A subset of the combinations may be configured with RRC for dynamic signaling. Additionally, or alternatively, the number of bits in DCI 0_1 may depend on the size of the subset. A downlink (DL) assignment with DCI format 1_1 may use the same combinations as DCI 0_1, except that CAPC may not be indicated (PUCCH may assume the highest priority). A communication system, such as NR-U, may support various channel access types based on LBT category, LBT type, and LBT measurement duration.

As discussed above, a network node may trigger of A-SRS with DCI formats 0_1 (scheduling PUSCH), and DCI 1_1 (scheduling physical downlink shared channel (PDSCH) and the corresponding PUCCH resource for hybrid automatic repeat request-acknowledge (HARQ-ACK)). This may result in the following cases: 1) depending on the SRS configuration and the time-domain allocation of A-SRS and PUSCH/PUCCH, SRS may occur before PUCCH/PUSCH, or vice versa; and 2) the A-SRS and PUSCH/PUCCH may or may not be allocated back-to-back (e.g., in some cases there may be one or more OFDM symbols between the A-SRS and PUSCH/PUCCH resources).

How the CP extension and LBT type may be determined in the case when a single downlink control signal (e.g., a DCI) schedules more than one UL transmission (e.g., both A-SRS and PUCCH or PUSCH) is still open. Furthermore, in addition to CP extension, a solution for the determination of LBT type, in case multiple transmissions (e.g., A-SRS and PUCCH/PUSCH) allocations are non-consecutive, is still unavailable.

Some embodiments described herein may provide a solution for determining CP extension and LBT type for scheduled uplink transmissions (e.g., for A-SRS, PUSCH, PUCCH or physical random access channel (PRACH)). Specifically, certain embodiments may provide for applying a CP and/or a LBT when a DCI schedules two or more discontinuous uplink transmissions. For example, certain embodiments may provide for determining the LBT type and CP extension for jointly scheduled (e.g., with the same DCI 0_1 or 1_1) A-SRS and PUSCH/PUCCH transmissions. When the two or more transmissions are non-consecutive, the first one of the transmissions may apply the CP extension and the LBT type indicated by the scheduling DCI. For the second transmission, the CP extension may depend on the CP extension indicated in the DCI.

In this way, certain embodiments may relate to triggering and transmission of SRS in unlicensed spectrum, including facilitating efficient LBT operation such that the likelihood of transmissions may be increased. In addition, certain embodiments may allow for a network node (e.g., a gNB) to control the duration of a CP extension in the case when a single DCI schedules two discontinuous uplink transmissions (e.g., an A-SRS as well as a PUSCH/PUCCH). Further, certain embodiments may not increase control signaling overhead in the DCI, while providing sufficient flexibility.

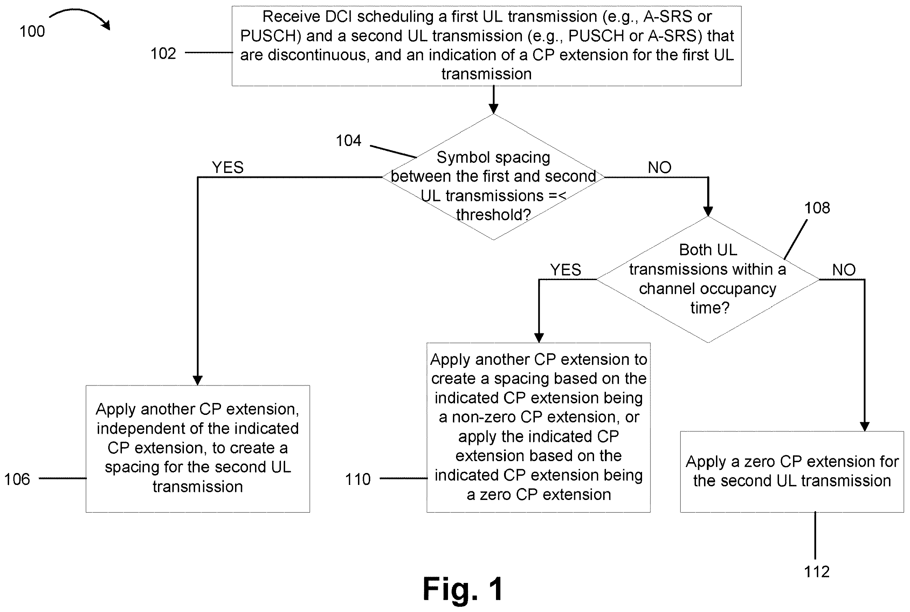

Fig. 1 illustrates an example method 100 of CP extension and LBT type determination for uplink transmissions, according to some embodiments. For example, Fig. 1 illustrates example operations of a UE. As illustrated at 102, the UE may receive, from a network node, DCI scheduling a first UL transmission (e.g., A-SRS or PUSCH) and a second UL transmission (e.g., PUSCH or A-SRS) that are discontinuous (which means there is a non-zero gap in time between the first UL transmission and the second UL transmission), and an indication of a CP extension for the first UL transmission. In certain embodiments, the DCI may further include an indication of a LBT type. For example, when the A-SRS and PUSCH/PUCCH transmissions are discontinuous, the UE may apply the indicated CP extension to the first UL transmission. Additionally, or alternatively, when the DCI includes an indication of a LBT type, the UE may apply the LBT type indicated by the scheduling DCI to the first UL transmission. As described below, the CP extension and/or the LBT type applied to the second UL transmission may depend on different scenarios.

As illustrated at 104, the UE may determine whether a symbol spacing between the first UL transmission and the second UL transmission is less than or equal to a threshold. The threshold may depend on a subcarrier spacing (SCS). For example, the threshold may be 1 symbol for 15 or 30 kilohertz (kHz) SCSs or 2 symbols for 60 kHz SCS. As illustrated at 106, if the UE determines that the symbol spacing fails to exceed the threshold (is less than or equal to the threshold) (104-YES), then the UE may apply another CP extension, independent of the indicated CP extension, to create a spacing for the second UL transmission. For example, the UE may apply a CP extension to the second UL transmission to create a 25 microsecond (us) spacing for the second UL transmission. It should be appreciated that in some embodiments, the UE may apply a CP extension to the second UL transmission to create a spacing with a different length (e.g., 16us) for the second UL transmission.

As illustrated at 108, if the UE determines that the symbol spacing exceeds the threshold (is greater than the threshold) (104-NO), then the UE may determine the CP extension for the second UL transmission further based on whether both UL transmissions (the first UL transmission and the second UL transmission) are within a channel occupancy time (COT). For example, the COT may be associated with the network node that provide the scheduling DCI. If the UE determines that both UL transmissions are within the COT (108-YES), then the UE may apply another CP extension (different from the indicated CP extension) or may apply the indicated CP extension. For instance, at 110, the UE may apply another CP extension to create a spacing based on the indicated CP extension being a non-zero CP extension (e.g., may apply a non-zero CP extension that may be different than the indicated non-zero CP extension), or may apply the indicated CP extension based on the indicated CP extension being a zero CP extension. If the UE determines that any of the UL transmissions are not within the COT (108-NO), then the UE may, at 112, apply a zero CP extension for the second UL transmission.

As described above, the CP extension for the second UL transmission may depend on the CP extension indicated in the DCI. For example, the CP extension for the second UL transmission may depend on the CP extension indicated in the DCI according to Table 1:

**Table 1: CP Extension for Second UL Transmission Based on Indicated CP Extension**

| **CP Extension Indicated in the DCI (used for the first UL transmission)** | **CP Extension for the Second UL transmission** |
|---|---|
| 0 (no CP extension) | 0 |
| C1*symbol length - 25 us | 0 OR C1*symbol length - 25 us |
| C2*symbol length - 16 us - TA | 0 OR C1*symbol length - 25 us |
| C3 *symbol length - 25 us - TA | 0 OR C1*symbol length - 25 us |

In the example shown in above Table 1, C1, C2, and C3 may be positive integers that may be configured via RRC signaling from the network node and TA is a timing advance. From Table 1, whether to select for the second UL transmission a "0" CP extension, or "C1*symbol length - 25 us" CP extension may be determined as follows: if the spacing is 1 symbol (or at most 2 symbols at 60 kHz SCS), a CP extension of C1*symbol length - 25 us may be used. This may allow for efficient user multiplexing (e.g., when the PUSCH/PUCCH transmission precedes A-SRS, as Type 2A LBT may not be allowed in spacing exceeding 25 us).

If the spacing between the first and the second UL transmissions is more than 1 OFDM symbol for 15 or 30 kHz SCS (or more than 2 symbols for 60 kHz SCS), a "0" CP extension may be used. The UE may apply the spacing in this manner except for a transmission within a COT. If the network node indicates to the UE a Type 1 LBT (e.g., category (Cat) 4), the UE may apply a second non-zero CP extension (e.g., C1*symbol length - 25 us), if a first non-zero CP extension is indicated in the DCI. The applied second non-zero CP extension to the second UL transmission may be different from the first non-zero CP extension indicated for the first UL transmission in the DCI. Otherwise, for example, when a "0" CP extension and/or Type 2A/B/C LBT is indicated in the DCI, the UE may apply a "0" CP extension. In this case, the UE may be allowed to switch to Type 2A LBT. For a transmission outside of a gNB COT, the UE shall use a "0" CP extension for the second transmission.

If LBT type is indicated in the DCI, the UE may apply the indicated LBT type for the first UL transmission. For the second UL transmission, the UE may apply the indicated LBT type, another LBT type, or may not apply a LBT type based on at least one of the indicated LBT type, signaling from the network node, or a duration of the first uplink transmission and the second uplink transmission. Mapping similar to that in Table 1 may also be defined for LBT types, e.g., according to Table 2:

**Table 2: LBT Type for Second UL Transmission Based on Indicated LBT Type**

| **LBT Type in the DCI (used for the first UL transmission)** | **LBT Type for the second UL transmission** |
|---|---|
| Type 1 (Cat 4) | Type 1 (Cat 4) OR Type 2A (Cat2 25 us) |
| Type 2A (Cat2 25 us) | Type 2A (Cat2 25 us) |
| Type 2B (Cat2 16 us) | Type 2A (Cat2 25 us) |
| Type 2C (no LBT) | Type 2A (Cat2 25 us) |

With respect to the above LBT categories, Cat 1 may include no use of LBT. For example, no LBT procedure may be performed by the transmitting UE. Cat 2 may include LBT without random back-off. For example, the duration of time that the channel is sensed to be idle before the transmitting UE transmits may be deterministic. Cat 3 may include LBT with random back-off with a contention window of fixed size. For example, the LBT procedure may have the following as one of its components. The transmitting UE may draw a random number N within a contention window. The size of the contention window may be specified by the minimum and maximum value of N where the size of the contention window may be fixed. The random number N may be used in the LBT procedure to determine the duration of time that the channel is sensed to be idle before the transmitting entity transmits on the channel. Cat 4 may include LBT with random back-off with a contention window of variable size. For example, the LBT procedure may have the following as one of its components. The transmitting UE may draw a random number N within a contention window. The size of contention window may be specified by the minimum and maximum value of N. The transmitting UE can vary the size of the contention window when drawing the random number N. The random number N may be used in the LBT procedure to determine the duration of time that the channel is sensed to be idle before the transmitting UE transmits on the channel.

In some embodiments, in the case where Type 1 LBT is indicated in the DCI, the UE may use Type 2A LBT when the CP extension prior to the second UL transmission is "C1*symbol length - 25 us" (e.g., the gap between the first and the second UL transmissions may be 25 us). In the case where there is no spacing between the two UL transmissions (e.g., A-SRS and PUSCH/PUCCH transmissions), both transmissions may be considered as a single transmission for which the indicated CP extension and the LBT type in the DCI is to be applied.

In certain embodiments, the spacing between the first and second UL transmissions scheduled by DCI could be configured to be, for example, 16us (instead of 25 us). This may allow efficient frequency domain multiplexing of the second UL transmission (SRS or PUCCH/PUSCH) with UL transmissions from other UEs that may be configured with Type2B or Type2C LBT. In this case, the CP extension for the second UL transmission may be determined based on the CP extension indicated in the DCI, e.g., according to Table 3:

**Table 3: CP Extension for the Second UL Transmission Based on the Indicated CP Extension**

| **CP Extension in the DCI (used for the first UL transmission)** | **CP Extension for the Second UL Transmission** |
|---|---|
| 0 (no CP extension) | 0 |
| C1*symbol length - 25 us | 0 OR C2*symbol length - 16 us |
| C2*symbol length - 16 us - TA | 0 OR C2*symbol length - 16 us |
| C3*symbol length - 25 us - TA | 0 OR C2*symbol length - 16 us |

Whether to apply, for the second UL transmission, a "0" CP extension or "C2*symbol length - 16 us" may be determined as follows: if the gap is 1 symbol (or at most 2 symbols at 60 kHz SCS), then C1*symbol length - 16 us may be used for the CP extension. Alternatively, if the gap between the first and the second UL transmissions is more than 1 OFDM symbol for 15 or 30 kHz SCS (or more than 2 symbols for 60 kHz SCS), then a "0" CP extension may be used for the CP extension. It should be appreciated that the 1 OFDM symbol is just presented as an example of a symbol spacing threshold for determining the CP extension of the second transmission. In other embodiments, a different symbol spacing threshold (e.g., 2 OFDM symbols, etc.) may be used.

Similarly, for the 16us example, the LBT type for the second UL transmission may be determined based on the LBT type signaled in the DCI, e.g., according to Table 4:

**Table 4: LBT Type for Second UL Transmission Based on Indicated LBT Type**

| **LBT Type in the DCI (used for the first UL transmission)** | **LBT Type for the Second UL Transmission** |
|---|---|
| Type 1 (Cat 4) | Type 1 (Cat 4) OR Type 2B (Cat2 16 us) OR Type 2C (no LBT) |
| Type 2A (Cat2 25 us) | Type 2B (Cat2 16 us) OR Type 2C (no LBT) |
| Type 2B (Cat2 16 us) | Type 2B (Cat2 16 us) OR Type 2C (no LBT) |
| Type 2C (no LBT) | Type 2B (Cat2 16 us) OR Type 2C (no LBT) |

Here, in case Type 1 LBT is indicated in the DCI, the UE may use Type 2B (or Type 2C) LBT in the case the CP extension prior to the second transmission is "C2*symbol length - 16 us" (e.g., the gap between the first and the second UL transmissions may be 16us). Otherwise, Type 1 LBT may be used.

Whether to use Type 2C or Type 2B LBT may be determined based on a higher layer configuration (e.g., RRC), or may be determined based on the LBT type signaled in the DCI. Additionally, or alternatively, whether to use Type 2C or Type 2B LBT may be based on the duration of the first and second UL transmissions. For example, if LBT type in the DCI is Type 1, Type2A, or Type 2B, then the LBT type for the second UL transmission may be Type2C, otherwise the LBT type for the second UL transmission may be Type2B. In this case, use of Type 2C LBT type could be subject to the additional condition that the duration of the second UL transmission is less than a threshold duration, such as 0.584 milliseconds (ms). If LBT type in the DCI is Type2C and a sum of duration of first UL transmission + 16 us + duration of second UL transmission is less than the threshold duration, then the LBT type for second UL transmission may be Type2C, otherwise the LBT type for second transmission may be Type2B.

In some embodiments, the network node may transmit, and the UE may receive, signaling associated with indicating a manner in which to perform certain operations described herein. For example, whether, when determining the CP extension and the LBT type for the second UL transmission, the operations described with respect to Table 1 and Table 2, or the operations detailed with respect to Table 3 and Table 4, may be signaled to the UE using a higher layer configuration (e.g., RRC). In some embodiments, the network node may transmit, and the UE may receive, signaling indicating enabling (or disabling) of the operation for determining a CP extension and/or an LBT type for the second transmission by the UE based on a certain rule described above.

As described above, Fig. 1 is provided as an example. Other examples are possible, according to some embodiments.

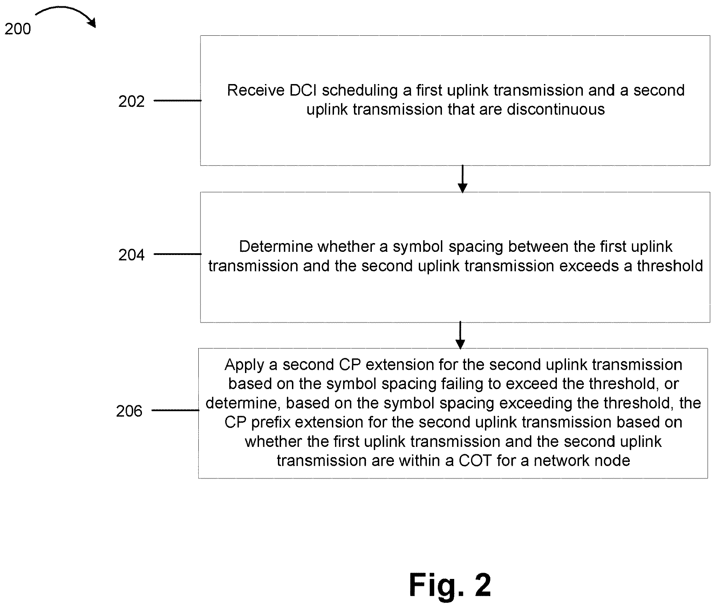

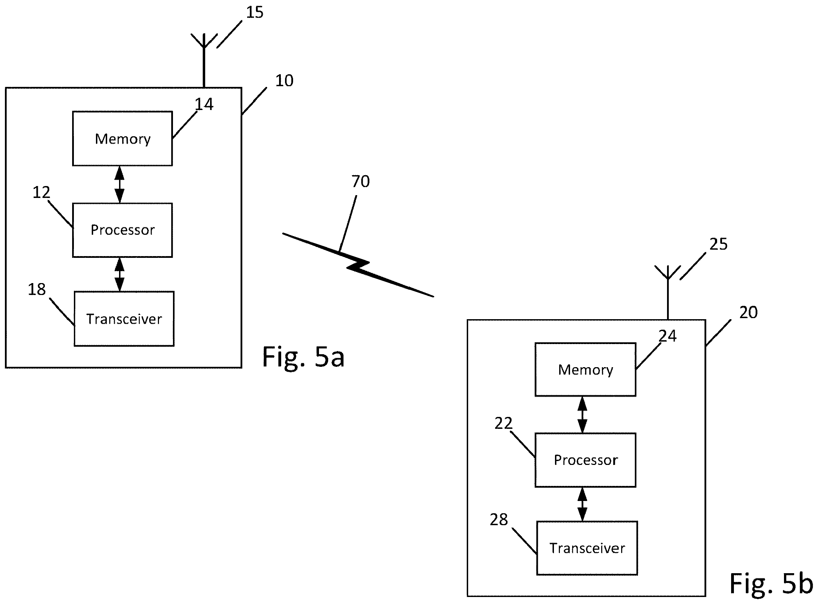

Fig. 2 illustrates an example flow diagram of a method 200, according to some embodiments. For example, Fig. 2 shows example operations of a UE (e.g., apparatus 20 illustrated in, and described with respect to, Fig. 5b). Some of the operations illustrated in Fig. 2 may be similar to some operations shown in, and described with respect to, Fig. 1.

In an embodiment, the method may include, at 202, receiving DCI scheduling a first uplink transmission and a second uplink transmission that are discontinuous. The DCI may include an indication of a first CP extension. In some embodiments, the first uplink transmission occurs prior to the second uplink transmission. In an embodiment, the method may include, at 204, determining whether a symbol spacing between the first uplink transmission and the second uplink transmission exceeds a threshold. In an embodiment, the method may include, at 206, applying a second CP extension (e.g., a zero, a non-zero, or a second non-zero CP extension) for the second uplink transmission based on the symbol spacing failing to exceed the threshold, or determining, based on the symbol spacing exceeding the threshold, the CP extension for the second uplink transmission based on whether the first uplink transmission and the second uplink transmission are within a COT for a network node.

The second CP extension may be independent of the indicated first CP extension. In some embodiments, the second CP extension is non-zero (e.g., may be the same non-zero CP extension as the first non-zero CP extension below or may be a different non-zero CP extension than the first non-zero CP extension below). In connection with the determining at 206, the method may further include applying a first non-zero CP extension or the indicated first CP extension for the second uplink transmission if the first uplink transmission and the second uplink transmission are within the COT, or a zero CP extension for the second uplink transmission if the first uplink transmission or the second uplink transmission is not within the COT.

The UE may perform one or more other operations in connection with the method illustrated in Fig. 2. In certain embodiments, when the DCI further schedules a third uplink transmission which is discontinuous with the first transmission and the second transmission (e.g., the first transmission is scheduled to occur prior to the second transmission, which is scheduled to occur prior to the third transmission), the method may further comprise determining, based on a symbol spacing between the second transmission and the third transmission exceeding the threshold, whether the first, second, and third transmissions are within the COT for the network node. In certain embodiments, in connection with the previous determining, the method may include applying the first non-zero CP extension or the indicated first CP extension for the third uplink transmission if the first, second, and third transmissions are within the COT, or the zero CP extension for the third uplink transmission if at least one of the first, second, and third transmissions is not within the COT.

In certain embodiments, the method may further include applying the indicated first CP extension for the first uplink transmission. In certain embodiments, applying the first non-zero CP extension or the indicated first CP extension to the second or third transmissions may comprise applying the first non-zero CP extension if the first CP extension included in the DCI is a second non-zero CP extension, or applying the indicated first CP extension if the indicated first CP extension in the DCI is a zero CP extension.

In certain embodiments, applying the first non-zero CP extension or the indicated first CP extension may comprise applying the first non-zero CP extension based on a LBT type indicated in the DCI. In certain embodiments, determining whether the symbol spacing between the first uplink transmission and the second uplink transmission exceeds the threshold may further comprise determining whether the symbol spacing between the first uplink transmission and the second uplink transmission exceeds the threshold depending on a subcarrier spacing (SCS). For example, the threshold may be 1 symbol for a 15 or 30 kHz SCS, or 2 or more symbols for 60 kHz SCS.

In certain embodiments, the method may further include receiving signaling associated with indicating enabling or disabling of determining a CP extension for the second transmission based on the symbol spacing. That is, the operation of determining the CP extension and/or LBT type for the second transmission (and third transmission) by the UE based on one or more rules may be enabled or disabled by the network.

In certain embodiments, the DCI may further include an indication of a first LBT type. In certain embodiments, the method may further include applying the indicated LBT type for the first uplink transmission. In certain embodiments, the method may further include applying, for the second uplink transmission, the indicated LBT type, a second LBT type, or no LBT type based on at least one of the indicated LBT type, signaling, or a duration of the first uplink transmission and the second uplink transmission.

As described above, Fig. 2 is provided as an example. Other examples are possible according to some embodiments.

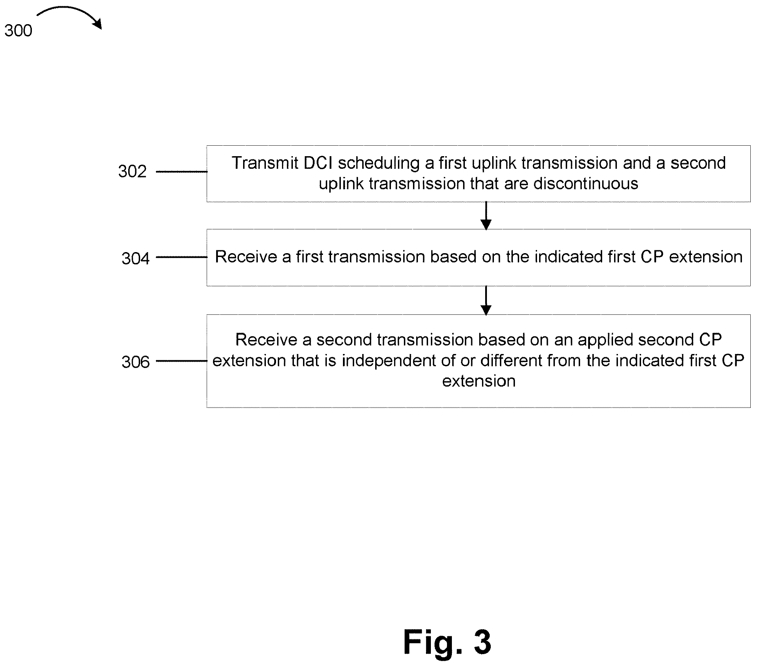

Fig. 3 illustrates an example flow diagram of a method 300, according to some embodiments. For example, Fig. 3 shows example operations of a network node (e.g., apparatus 10 illustrated in, and described with respect to, Fig. 5a). Some of the operations illustrated in Fig. 3 may be similar to some operations shown in, and described with respect to, Fig. 1.

In an embodiment, the method may include, at 302, transmitting DCI scheduling a first uplink transmission and a second uplink transmission that are discontinuous. The DCI may include an indication of a first CP extension. The method may include, at 304, receiving a first transmission based on the indicated first CP extension. The method may include, at 306, receiving a second transmission based on an applied second CP extension that is independent of or different from the indicated first CP extension. In some embodiments, the second CP extension may be determined based on one or more rules described with reference to method 200.

The network node may perform one or more other operations in connection with the method illustrated in Fig. 3. For example, the network node may transmit the DCI that further schedules a third uplink transmission which is discontinuous with the first transmission and the second transmission, and may receive the third uplink transmission.

As described above, Fig. 3 is provided as an example. Other examples are possible according to some embodiments.

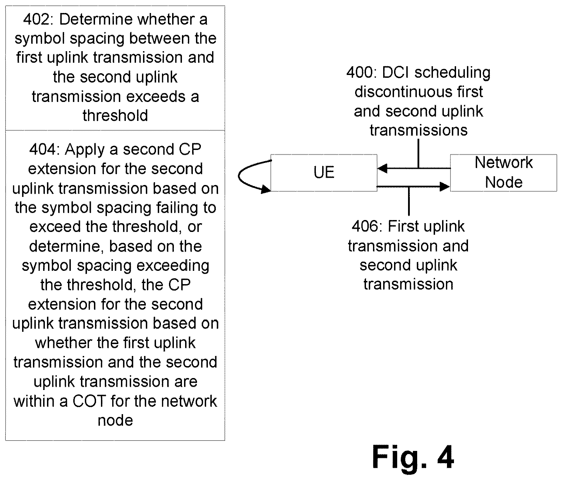

Fig. 4 illustrates another example of CP extension and LBT type determination for uplink transmission, according to some embodiments. The example of Fig. 4 illustrates a UE and a network node. As illustrated at 400, the network node may transmit, and the UE may receive, DCI scheduling discontinuous first and second uplink transmissions, for example, in a manner similar to that described at 202 in the example of Fig. 2 and/or at 302 in the example of Fig. 3. As illustrated at 402, the UE may determine whether a symbol spacing between the first uplink transmission and the second uplink transmission exceeds a threshold, for example, in a manner similar to that described at 204 in the example of Fig. 2.

As illustrated at 404, the UE may apply a second CP extension for the second uplink transmission based on the symbol spacing failing to exceed the threshold, or may determine, based on the symbol spacing exceeding the threshold, the CP extension for the second uplink transmission based on whether the first uplink transmission and the second uplink transmission are within a COT for a network node, for example, in a manner similar to that described at 206 in the example of Fig. 2. The CP extension for the second transmission may be determined based on whether the first uplink transmission and the second uplink transmission are within a COT for a network node. As illustrated at 406, the UE may transmit, and the network node may receive, the first and second uplink transmissions, for example, in a manner similar to that described at 304 and 306 in the example of Fig. 4. As described above, Fig. 4 is provided as an example. Other examples are possible according to some embodiments.

Fig. 5a illustrates an example of an apparatus 10 according to an embodiment. In an embodiment, apparatus 10 may be a node, host, or server in a communications network or serving such a network. For example, apparatus 10 may be a network node, satellite, base station, a Node B, an evolved Node B (eNB), 5G Node B or access point, next generation Node B (NG-NB or gNB), and/or a WLAN access point, associated with a radio access network, such as a LTE network, 5G or NR. In some example embodiments, apparatus 10 may be an eNB in LTE or gNB in 5G.

It should be understood that, in some example embodiments, apparatus 10 may be comprised of an edge cloud server as a distributed computing system where the server and the radio node may be stand-alone apparatuses communicating with each other via a radio path or via a wired connection, or they may be located in a same entity communicating via a wired connection. For instance, in certain example embodiments where apparatus 10 represents a gNB, it may be configured in a central unit (CU) and distributed unit (DU) architecture that divides the gNB functionality. In such an architecture, the CU may be a logical node that includes gNB functions such as transfer of user data, mobility control, radio access network sharing, positioning, and/or session management, etc. The CU may control the operation of DU(s) over a front-haul interface. The DU may be a logical node that includes a subset of the gNB functions, depending on the functional split option. It should be noted that one of ordinary skill in the art would understand that apparatus 10 may include components or features not shown in Fig. 5a.

As illustrated in the example of Fig. 5a, apparatus 10 may include a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 12 is shown in Fig. 5a, multiple processors may be utilized according to other embodiments. For example, it should be understood that, in certain embodiments, apparatus 10 may include two or more processors that may form a multiprocessor system (e.g., in this case processor 12 may represent a multiprocessor) that may support multiprocessing. In certain embodiments, the multiprocessor system may be tightly coupled or loosely coupled (e.g., to form a computer cluster).

Processor 12 may perform functions associated with the operation of apparatus 10, which may include, for example, precoding of antenna gain/phase parameters, encoding and decoding of individual bits forming a communication message, formatting of information, and overall control of the apparatus 10, including processes related to management of communication or communication resources.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be comprised of any combination of random access memory (RAM), read only memory (ROM), static storage such as a magnetic or optical disk, hard disk drive (HDD), or any other type of non-transitory machine or computer readable media. The instructions stored in memory 14 may include program instructions or computer program code that, when executed by processor 12, enable the apparatus 10 to perform tasks as described herein.

In an embodiment, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10.

In some embodiments, apparatus 10 may also include or be coupled to one or more antennas 15 for transmitting and receiving signals and/or data to and from apparatus 10. Apparatus 10 may further include or be coupled to a transceiver 18 configured to transmit and receive information. The transceiver 18 may include, for example, a plurality of radio interfaces that may be coupled to the antenna(s) 15. The radio interfaces may correspond to a plurality of radio access technologies including one or more of Global System for Mobile Communications (GSM), narrow-band IoT (NB-IoT), LTE, 5G, Wireless Local Area Network (WLAN), Bluetooth (BT), Bluetooth Low Energy(BT-LE), Near-field communication (NFC), radio frequency identifier (RFID), ultrawideband (UWB), MulteFire, and the like. The radio interface may include components, such as filters, converters (for example, digital-to-analog converters and the like), mappers, a Fast Fourier Transform (FFT) module, and the like, to generate symbols for a transmission via one or more downlinks and to receive symbols (for example, via an uplink).

As such, transceiver 18 may be configured to modulate information on to a carrier waveform for transmission by the antenna(s) 15 and demodulate information received via the antenna(s) 15 for further processing by other elements of apparatus 10. In other embodiments, transceiver 18 may be capable of transmitting and receiving signals or data directly. Additionally or alternatively, in some embodiments, apparatus 10 may include an input and/or output device (I/O device).

In an embodiment, memory 14 may store software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software.

According to some embodiments, processor 12 and memory 14 may be included in or may form a part of processing circuitry or control circuitry. In addition, in some embodiments, transceiver 18 may be included in or may form a part of transceiver circuitry.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to case an apparatus (e.g., apparatus 10) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

As introduced above, in certain embodiments, apparatus 10 may be a network node or RAN node, such as a base station, access point, Node B, eNB, gNB, WLAN access point, or the like.

According to certain embodiments, apparatus 10 may be controlled by memory 14 and processor 12 to perform the functions associated with any of the embodiments described herein, such as some operations illustrated in, or described with respect to, Figs. 1-4. For instance, apparatus 10 may be controlled by memory 14 and processor 12 to perform the method of Fig. 3.

Fig. 5b illustrates an example of an apparatus 20 according to another embodiment. In an embodiment, apparatus 20 may be a node or element in a communications network or associated with such a network, such as a UE, mobile equipment (ME), mobile station, mobile device, stationary device, IoT device, or other device. As described herein, a UE may alternatively be referred to as, for example, a mobile station, mobile equipment, mobile unit, mobile device, user device, subscriber station, wireless terminal, tablet, smart phone, IoT device, sensor or NB-IoT device, a watch or other wearable, a head-mounted display (HMD), a vehicle, a drone, a medical device and applications thereof (e.g., remote surgery), an industrial device and applications thereof (e.g., a robot and/or other wireless devices operating in an industrial and/or an automated processing chain context), a consumer electronics device, a device operating on commercial and/or industrial wireless networks, or the like. As one example, apparatus 20 may be implemented in, for instance, a wireless handheld device, a wireless plug-in accessory, or the like.

In some example embodiments, apparatus 20 may include one or more processors, one or more computer-readable storage medium (for example, memory, storage, or the like), one or more radio access components (for example, a modem, a transceiver, or the like), and/or a user interface. In some embodiments, apparatus 20 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatus 20 may include components or features not shown in Fig. 5b.

As illustrated in the example of Fig. 5b, apparatus 20 may include or be coupled to a processor 22 for processing information and executing instructions or operations. Processor 22 may be any type of general or specific purpose processor. In fact, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 22 is shown in Fig. 5b, multiple processors may be utilized according to other embodiments. For example, it should be understood that, in certain embodiments, apparatus 20 may include two or more processors that may form a multiprocessor system (e.g., in this case processor 22 may represent a multiprocessor) that may support multiprocessing. In certain embodiments, the multiprocessor system may be tightly coupled or loosely coupled (e.g., to form a computer cluster).

Processor 22 may perform functions associated with the operation of apparatus 20 including, as some examples, precoding of antenna gain/phase parameters, encoding and decoding of individual bits forming a communication message, formatting of information, and overall control of the apparatus 20, including processes related to management of communication resources.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 24 can be comprised of any combination of random access memory (RAM), read only memory (ROM), static storage such as a magnetic or optical disk, hard disk drive (HDD), or any other type of non-transitory machine or computer readable media. The instructions stored in memory 24 may include program instructions or computer program code that, when executed by processor 22, enable the apparatus 20 to perform tasks as described herein.

In an embodiment, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20.

In some embodiments, apparatus 20 may also include or be coupled to one or more antennas 25 for receiving a downlink signal and for transmitting via an uplink from apparatus 20. Apparatus 20 may further include a transceiver 28 configured to transmit and receive information. The transceiver 28 may also include a radio interface (e.g., a modem) coupled to the antenna 25. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an uplink.

For instance, transceiver 28 may be configured to modulate information on to a carrier waveform for transmission by the antenna(s) 25 and demodulate information received via the antenna(s) 25 for further processing by other elements of apparatus 20. In other embodiments, transceiver 28 may be capable of transmitting and receiving signals or data directly. Additionally or alternatively, in some embodiments, apparatus 20 may include an input and/or output device (I/O device). In certain embodiments, apparatus 20 may further include a user interface, such as a graphical user interface or touchscreen.

In an embodiment, memory 24 stores software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software. According to an example embodiment, apparatus 20 may optionally be configured to communicate with apparatus 10 via a wireless or wired communications link 70 according to any radio access technology, such as NR.

According to some embodiments, processor 22 and memory 24 may be included in or may form a part of processing circuitry or control circuitry. In addition, in some embodiments, transceiver 28 may be included in or may form a part of transceiving circuitry.

As discussed above, according to some embodiments, apparatus 20 may be a UE, mobile device, mobile station, ME, IoT device and/or NB-IoT device, for example. According to certain embodiments, apparatus 20 may be controlled by memory 24 and processor 22 to perform the functions associated with example embodiments described herein. For example, in some embodiments, apparatus 20 may be configured to perform one or more of the operations illustrated in, or described with respect to, Figs. 1-4. For instance, in one embodiment, apparatus 20 may be controlled by memory 24 and processor 22 to perform the method of Fig. 2.

In some embodiments, an apparatus may include means for performing a method or any of the variants discussed herein, e.g., a method described with reference to Figs. 2 or 3. Examples of the means may include one or more processors, memory, and/or computer program codes for causing the performance of the operation.

Therefore, certain example embodiments provide several technological improvements, enhancements, and/or advantages over existing technological processes. For example, one benefit of some example embodiments is network node control of the duration of a CP extension in the case when a single DCI schedules two or more discontinuous uplink transmissions (e.g., an A-SRS as well as a PUSCH/PUCCH). Another example benefit may include more flexibility while not increasing control signaling overhead in the DCI. Accordingly, the use of some example embodiments results in improved functioning of communications networks and their nodes and, therefore constitute an improvement at least to the technological field of UL transmissions, among others.

In some example embodiments, the functionality of any of the methods, processes, signaling diagrams, algorithms or flow charts described herein may be implemented by software and/or computer program code or portions of code stored in memory or other computer readable or tangible media, and executed by a processor.

In some example embodiments, an apparatus may be included or be associated with at least one software application, module, unit or entity configured as arithmetic operation(s), or as a program or portions of it (including an added or updated software routine), executed by at least one operation processor. Programs, also called program products or computer programs, including software routines, applets and macros, may be stored in any apparatus-readable data storage medium and may include program instructions to perform particular tasks.

A computer program product may include one or more computer-executable components which, when the program is run, are configured to carry out some example embodiments. The one or more computer-executable components may be at least one software code or portions of code. Modifications and configurations used for implementing functionality of an example embodiment may be performed as routine(s), which may be implemented as added or updated software routine(s). In one example, software routine(s) may be downloaded into the apparatus.

As an example, software or a computer program code or portions of code may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and/or software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus (e.g., apparatus 10 or apparatus 20), for example through the use of an application specific integrated circuit (ASIC), a programmable gate array (PGA), a field programmable gate array (FPGA), or any other combination of hardware and software. In yet another example embodiment, the functionality may be implemented as a signal, such as a non-tangible means that can be carried by an electromagnetic signal downloaded from the Internet or other network.

According to an example embodiment, an apparatus, such as a node, device, or a corresponding component, may be configured as circuitry, a computer or a microprocessor, such as single-chip computer element, or as a chipset, which may include at least a memory for providing storage capacity used for arithmetic operation(s) and/or an operation processor for executing the arithmetic operation(s).

Example embodiments described herein apply equally to both singular and plural implementations, regardless of whether singular or plural language is used in connection with describing certain embodiments. For example, an embodiment that describes operations of a single network node equally applies to embodiments that include multiple instances of the network node, and vice versa.

One having ordinary skill in the art will readily understand that the example embodiments as discussed above may be practiced with operations in a different order, and/or with hardware elements in configurations which are different than those which are disclosed. Therefore, although some embodiments have been described based upon these example preferred embodiments, it would be apparent to those of skill in the art that certain modifications, variations, and alternative constructions would be apparent, while remaining within the spirit and scope of example embodiments.

According to a first embodiment, a method may include receiving, by a user equipment, downlink control information scheduling a first uplink transmission and a second uplink transmission that are discontinuous. The downlink control information may include an indication of a first cyclic prefix extension. The method may include determining whether a symbol spacing between the first uplink transmission and the second uplink transmission exceeds a threshold. The method may include applying a second cyclic prefix extension for the second uplink transmission based on the symbol spacing failing to exceed the threshold. The second cyclic prefix extension may be independent of the indicated first cyclic prefix extension. The method may include determining, based on the symbol spacing exceeding the threshold, the cyclic prefix extension for the second uplink transmission based on whether the first uplink transmission and the second uplink transmission are within a channel occupancy time for a network node. The method may include applying a first non-zero cyclic prefix extension or the indicated first cyclic prefix extension for the second uplink transmission if the first uplink transmission and the second uplink transmission are within the channel occupancy time, or a zero cyclic prefix extension for the second uplink transmission if the first uplink transmission or the second uplink transmission is not within the channel occupancy time.

In a variant, the downlink control information may further schedule a third uplink transmission which is discontinuous with the first transmission and the second transmission. The method may further include determining, based on a symbol spacing between the second transmission and the third transmission exceeding the threshold, whether the first, second, and third transmissions are within the channel occupancy time for the network node. The method may further include applying the first non-zero cyclic prefix extension or the indicated first cyclic prefix extension for the third uplink transmission if the first, second, and third transmissions are within the channel occupancy time, or the zero cyclic prefix extension for the third uplink transmission if at least one of the first, second, and third transmissions are not within the channel occupancy time.

In a variant, the method may further include applying the indicated first cyclic prefix extension for the first uplink transmission. In a variant, applying the first non-zero cyclic prefix extension or the indicated first cyclic prefix extension to the second or third transmissions may include applying the first non-zero cyclic prefix extension if the first cyclic prefix extension is a second non-zero cyclic prefix extension, or applying the indicated first cyclic prefix extension if the indicated first cyclic prefix extension in the downlink control information is a zero cyclic prefix extension. In a variant, applying the first non-zero cyclic prefix extension or the indicated first cyclic prefix extension may include applying the first non-zero cyclic prefix extension based on a listen before talk type indicated in the downlink control information.

In a variant, determining whether the symbol spacing between the first uplink transmission and the second uplink transmission exceeds the threshold may include determining whether the symbol spacing between the first uplink transmission and the second uplink transmission exceeds the threshold depending on a subcarrier spacing. In a variant, the method may further include receiving signaling associated with indicating enabling or disabling of determining a cyclic prefix extension for the second transmission based on the symbol spacing.

In a variant, the downlink control information may further include an indication of a first listen before talk type. In a variant, the method may further include applying the indicated listen before talk type for the first uplink transmission. In a variant, the method may further include applying, for the second uplink transmission, the indicated listen before talk type, a second listen before talk type, or no listen before talk type based on at least one of the indicated listen before talk type, signaling, or a duration of the first uplink transmission and the second uplink transmission.

A second embodiment may be directed to an apparatus including at least one processor and at least one memory comprising computer program code. The at least one memory and computer program code may be configured, with the at least one processor, to cause the apparatus at least to perform the method according to the first embodiment, or any of the variants discussed above.

A third embodiment may be directed to an apparatus that may include circuitry configured to perform the method according to the first embodiment, or any of the variants discussed above.

A fourth embodiment may be directed to an apparatus that may include means for performing the method according to the first embodiment, or any of the variants discussed above. Examples of the means may include one or more processors, memory, and/or computer program codes for causing the performance of the operation.

A fifth embodiment may be directed to a computer readable medium comprising program instructions stored thereon for performing at least the method according to the first embodiment, or any of the variants discussed above.

A sixth embodiment may be directed to a computer program product encoding instructions for performing at least the method according to the first embodiment, or any of the variants discussed above.

### PARTIAL GLOSSARY

- A-SRS: Aperiodic SRS
- CAPC: Channel Access Priority Class
- CG-PUSCH: Configured Grant PUSCH
- COT: Channel Occupancy Time
- CP: Cyclic Prefix
- CSI: Channel State Information
- DCI: Downlink Control Information
- DL: Downlink
- GC-PDCCH: Group Common PDCCH
- LBT: Listen Before Talk
- OFDM: Orthogonal Frequency Division Multiplexing
- P/SP: Periodic and Semi-Persistent
- PDCCH: Physical Downlink Control Channel
- PUCCH: Physical Uplink Control Channel
- PUSCH: Physical Uplink Shared Channel
- RRC: Radio Resource Control
- SR: Scheduling Request
- SRS: Sounding Reference Signal
- TA: Timing Advance
- UL: Uplink

## Claims

1. A method (200), comprising:
receiving (202), by a user equipment (20), downlink control information scheduling a first uplink transmission and a second uplink transmission that are discontinuous, wherein the downlink control information includes an indication of a first cyclic prefix extension;
determining (204) whether a symbol spacing between the first uplink transmission and the second uplink transmission exceeds a threshold; and
based on the symbol spacing failing to exceed the threshold, applying (206) a second cyclic prefix extension for the second uplink transmission, wherein the second cyclic prefix extension is independent of the indicated first cyclic prefix extension, or
based on the symbol spacing exceeding the threshold, performing (206) one of:
applying a first non-zero cyclic prefix extension or the indicated first cyclic prefix extension for the second uplink transmission, if the first uplink transmission and the second uplink transmission are within a channel occupancy time for a network node, or
applying a zero cyclic prefix extension for the second uplink transmission, if the first uplink transmission or the second uplink transmission is not within the channel occupancy time.

2. The method (200) according to claim 1, wherein the downlink control information further schedules a third uplink transmission which is discontinuous with the first transmission and the second transmission, and wherein the method further comprises:
based on a symbol spacing between the second transmission and the third transmission exceeding the threshold, determining whether the first, second, and third transmissions are within the channel occupancy time for the network node, and
applying one of the following for the third uplink transmission:
the first non-zero cyclic prefix extension or the indicated first cyclic prefix extension, if the first, second, and third transmissions are within the channel occupancy time, or
the zero cyclic prefix extension, if at least one of the first, second, and third transmissions are not within the channel occupancy time.

3. The method (200) according to claim 1 or 2, wherein applying the first non-zero cyclic prefix extension or the indicated first cyclic prefix extension for the second transmission comprises:
applying the first non-zero cyclic prefix extension if the indicated first cyclic prefix extension is a second non-zero cyclic prefix extension, or
applying the indicated first cyclic prefix extension if the indicated first cyclic prefix extension is a zero cyclic prefix extension.

4. The method (200) according to any of claims 1-3, wherein applying the first non-zero cyclic prefix extension or the indicated first cyclic prefix extension comprises:
applying the first non-zero cyclic prefix extension based on a listen before talk type indicated in the downlink control information.

5. The method (200) according to any of claims 1-4, wherein the threshold is dependent on a subcarrier spacing.

6. An apparatus (20), comprising means for performing:
receiving downlink control information scheduling a first uplink transmission and a second uplink transmission that are discontinuous, wherein the downlink control information includes an indication of a first cyclic prefix extension;
determining whether a symbol spacing between the first uplink transmission and the second uplink transmission exceeds a threshold; and
based on the symbol spacing failing to exceed the threshold, applying a second cyclic prefix extension for the second uplink transmission, wherein the second cyclic prefix extension is independent of the indicated first cyclic prefix extension, or
based on the symbol spacing exceeding the threshold, performing one of:
applying a first non-zero cyclic prefix extension or the indicated first cyclic prefix extension for the second uplink transmission, if the first uplink transmission and the second uplink transmission are within a channel occupancy time for a network node, or
applying a zero cyclic prefix extension for the second uplink transmission, if the first uplink transmission or the second uplink transmission is not within the channel occupancy time.

7. The apparatus (20) according to claim 6, wherein the downlink control information further schedules a third uplink transmission which is discontinuous with the first transmission and the second transmission, and the means are further configured to perform:
determining, based on the symbol spacing between the second transmission and the third transmission exceeding the threshold, whether the first, second, and third transmissions are within the channel occupancy time for the network node, and
applying one of the following for the third uplink transmission:
the first non-zero cyclic prefix extension or the indicated first cyclic prefix extension, if the first, second, and third transmissions are within the channel occupancy time, or
the zero cyclic prefix extension, if at least one of the first, second, and third transmissions are not within the channel occupancy time.

8. The apparatus (20) according to claim 6 or 7, wherein the means are further configured to perform:
applying the indicated first cyclic prefix extension for the first uplink transmission.

9. The apparatus (20) according to any of claims 6-8, wherein the means are further configured to, when applying the first non-zero cyclic prefix extension or the indicated first cyclic prefix extension to the second or third transmissions, perform:
applying the first non-zero cyclic prefix extension, if the indicated first cyclic prefix extension is a second non-zero cyclic prefix extension, or
applying the indicated first cyclic prefix extension, if the indicated first cyclic prefix extension is a zero cyclic prefix extension.

10. The apparatus (20) according to any of claims 6-9, wherein the means are further configured to, when applying the first non-zero cyclic prefix extension or the indicated first cyclic prefix extension, perform:
applying the first non-zero cyclic prefix extension based on a listen before talk type indicated in the downlink control information.

11. The apparatus (20) according to any of claims 6-10, wherein the threshold is dependent on a subcarrier spacing.

12. The apparatus (20) according to any of claims 6-11, wherein the means are further configured to perform:
receiving signaling associated with enabling or disabling of determining a cyclic prefix extension for the second transmission based on the symbol spacing.

13. The apparatus (20) according to any of claims 6-12, wherein the downlink control information further includes an indication of a first listen before talk type.

14. The apparatus (20) according to claim 13, wherein the means are further configured to perform:
applying the indicated listen before talk type for the first uplink transmission.

15. The apparatus (20) according to claim 13 or 14, wherein the means are further configured to perform:
applying, for the second uplink transmission, the indicated listen before talk type, a second listen before talk type, or no listen before talk type based on at least one of:
the indicated listen before talk type,
signaling, or
a duration of the first uplink transmission and the second uplink transmission.
